# EUROPÄISCHE PATENTSCHRIFT

(11) **EP 0 928 076 B1**
(45) Veröffentlichungstag und Bekanntmachung des Hinweises auf die Patenterteilung: **23.10.2002**
(21) Anmeldenummer: 97440131.7
(22) Anmeldetag: 15.12.1997
(51) Int. Cl.: H04B 7/12, H04B 7/24

(54) **Hybrides Übertragungssystem mit einer Rückfallösung für Verbindungen mit hohen Anforderungen an die Verfügbarkeit**
Hybrid transmission system having a fallback solution for connections with high availability requirements
Système de transmission hybride avec une solution de repliement pour des connections exigeant haute disponibilité

(43) Veröffentlichungstag der Anmeldung: 07.07.1999
(73) Patentinhaber: ALCATEL, 75008 Paris (FR)
(72) Erfinder: Junginger, Bernhard, 71229 Leonberg (DE); Witte, Martin, 70435 Stuttgart (DE); Krimmel, Heinz, 70825 Korntal-Münchingen (DE); Heidemann, Rolf, Dr., 71732 Tamm (DE)
(74) Vertreter: Knecht, Ulrich Karl, Dipl.-Ing.

(56) Entgegenhaltungen:
- EP-A- 0 748 066
- US-A- 3 676 778
- TOSHIHIRO MANABE ET AL: "TRANSMISSION POWER CONTROL EFFECTS FOR QUASI-MILLIMETER MICROWAVE ACCESS SYSTEMS" ELECTRONICS & COMMUNICATIONS IN JAPAN, PART I - COMMUNICATIONS, Bd. 79, Nr. 1, 1.Januar 1996, Seiten 52-62, XP000553790
- PATENT ABSTRACTS OF JAPAN vol. 013, no. 474 (E-836), 26.Oktober 1989 & JP 01 186022 A (MITSUBISHI ELECTRIC CORP), 25.Juli 1989,
- PATENT ABSTRACTS OF JAPAN vol. 014, no. 241 (E-0931), 22.Mai 1990 & JP 02 065532 A (MITSUBISHI ELECTRIC CORP), 6.März 1990,

## Beschreibung

Die Erfindung betrifft ein Übertragungssystem gemäß dem Oberbegriff des Anspruchs 1. Die Erfindung betrifft außerdem eine Antenneneinheit für ein solches Übertragungssystem. Desweiteren betrifft die Erfindung ein unidirektionales Übertragungssystem.

Ein Übertragungssystem gemäß dem Oberbegriff des Anspruchs 1 ist z. B. aus einer Veröffentlichung von Toshihiro Manabe et al, "Transmission Power Control Effects for Quasi-Millimeter Microwave Access Systems", in Electronics and Communications in Japan, Part 1, Vol. 79, No. 1, 1996, Seiten 52 bis 63 bekannt. Dort sind einige Netzwerkkonzepte für ein diensteintegrierendes digitales Netzwerk (ISDN) angegeben. Dazu gehören z. B. das FTTH-Konzept (fiber-to-the-home) und das FTTZ-Konzept (fiber-tothe-zone). Ausgehend vom FTTH-Konzept sind eine Zentralstation (central station CS) und mehrere teilnehmerseitigen Außenstationen (outstation OS) festgelegt. Zur Zentralstation werden optische Signale gesendet, d. h. die Zentralstation bildet den Abschluß der optischen Übertragungsstrecke.

In der Zentralstation werden die optischen Signale in elektrische Signale gewandelt, so daß im Betrieb zwischen der Zentralstation und einer Außenstation Signale mit Hilfe von Funksignalen übertragen werden können, die Wellenlängen haben, die im Mikrowellenbereich liegen. In der Veröffentlichung haben die Funksignale eine Frequenz von 22,185 GHz (Außenstation zur Zentralstation) und 21,535 GHz (Zentralstation zur Außenstation). Die Übertragung der Funksignale im Mikrowellenbereich hat den Vorteil, daß Signale mit einer hohen Bandbreite und mit einer hohen Übertragungsrate übertragen werden können.

In dieser Veröffentlichung ist angegeben, daß bei Regen Probleme bei der Übertragung der Funksignale auftreten. Zu diesen Problemen gehört z. B. eine Verschlechterung der Übertragungsqualität aufgrund der durch Regen verursachten erhöhten Dämpfung der Funksignale, die das Verhältnis von Signal und Rauschen verschlechtert.

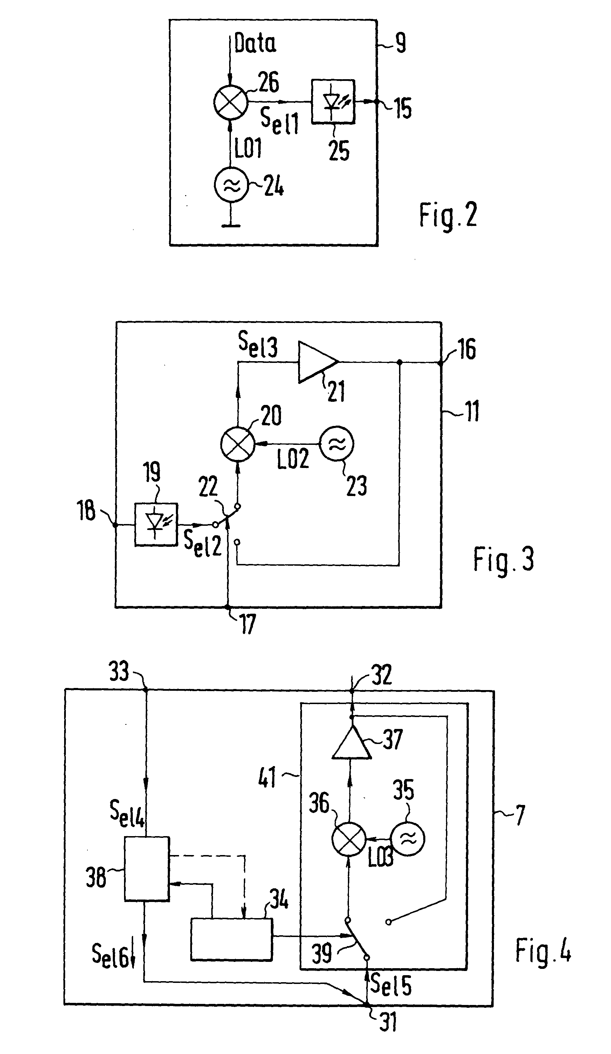

Zur Lösung des Problems der erhöhten Dämpfung bei Regen wird vorgeschlagen, in den Außenstationen eine Überwachung und Steuerung der Sendeleistung vorzunehmen. Jede Außenstation hat dafür einen in Fig. 3 der Veröffentlichung gezeigten Transceiver. Der Transceiver hat eine Antenne, die mit einem Empfangsteil und einem Sendeteil verbunden ist. Außerdem ist eine Steuereinrichtung (Controller) vorhanden, die einen Prozessor (CPU), einen Speicher (Table), einen A/D- und einen D/A-Wandler hat. Der Speicher speichert den Wert der Empfangsleistung bei Normalbetrieb (steady state). Dieser Wert wird mit einem kontinuierlich bestimmten Wert der Empfangsleistung verglichen; die Differenz ergibt die erhöhte Dämpfung bei Regen. Für den Fall, daß eine erhöhte Dämpfung bei Regen vorliegt, erhöht die Steuereinrichtung die Sendeleistung.

Nachteilig an einem solchen Transceiver ist, daß die Sendeleistung nicht beliebig erhöht werden kann, um die erhöhte Dämpfung bei Regen zu überwinden. Es kann somit Situationen geben, in denen eine ausreichende Signalübertragung nicht mehr gewährleistet ist. Außerdem ist es von Nachteil, daß der Transceiver aufwendig gestaltet ist. Da er nahe bei den Teilnehmern angeordnet ist, sollte ein solcher Transceiver jedoch möglichst kostengünstig sein.

Das Problem der erhöhten Dämpfung bei Regen behandelt auch die Veröffentlichung von Masaki Sato et al, "Adaptive Data Rate Control TDMA Systems as a Rain Attenuation Compensation Technique", Proceedings of the Third International Mobile Satellite Conference IMSC '93, Pasadena, CA, USA, 16. bis 18. Juni, 1993, Seiten 505 bis 510. Daraus ist bekannt, daß bei Frequenzen oberhalb von 10 GHz die erhöhte Dämpfung bei Regen schwerwiegende Auswirkungen auf eine Signalübertragung zwischen der Erde und dem All hat.

Um dieses Problem zu lösen, wird in dieser Veröffentlichung (Masaki Sato) vorgeschlagen, die Übertragungsrate an momentane Wetterverhältnisse anzupassen. Ein in einem Endgerät (Adaptive Transmission-Rate TDMA terminal) vorhandener Empfänger stellt eine Verschlechterung der Bitfehlerrate (BER) oder eine Verschlechterung des Verhältnisses von Signal und Rauschen fest und fordert den Sender des Signals auf, die Übertragungsrate zu reduzieren.

Nachteilig an diesem Vorschlag ist, daß bei starkem Regen die Übertragungsrate so stark zu reduzieren wäre, so daß eine zufriedenstellende und ausreichende Übertragung von Signalen nicht mehr möglich wäre.

An Übertragungssysteme, vor allem an solche, mit denen neben interaktiven Diensten abseits lebenden Teilnehmern auch ein Kommunikationsmedium (z. B. Telefon) zur Verfügung gestellt wird, werden hohe Anforderungen an die Zuverlässigkeit und Verfügbarkeit gestellt.

In US 3,676,778 ist ein Satellitenkommunikationssystem offenbart, daß terrestrische Stationen und eine Satellitenstation aufweist. Die terrestrischen Stationen beinhalten jeweils eine Vielzahl von Frequenzumsetzern. Jeder Frequenzumsetzer dient der Umsetzung in ein anderes Frequenzband. Bei einer Beeinträchtigung der Übertragungsqualität durch Regen wird durch eine Steuereinheit ein **Frequenzband zur Übertragung ausgewählt, das eine geringere Beeinträchtigung durch den Regen erfährt.**

Der Erfindung liegt die Aufgabe zugrunde, ein Übertragungssystem anzugeben, das auch bei ungünstigen Wetterverhältnissen, z. B. bei starkem Regen, die Anforderungen an die Zuverlässigkeit und Verfügbarkeit erfüllt. Ein diese Aufgabe lösendes Übertragungssystem ist Gegenstand des Anspruchs 1. Der Erfindung liegt außerdem die Aufgabe zugrunde, für ein solches Übertragungssystem eine Antenneneinheit anzugeben. Eine Antenneneinheit ist Gegenstand des Anspruchs 3. Eine Anwendung der Erfindung in einem unidirektionalen Übertragungssystem ist Gegenstand des Anspruchs 7. Vorteilhafte Ausgestaltungen der Erfindung sind in den Unteransprüchen angegeben.

Ein Vorteil der Erfindung ist, daß bei starkem Regen in der Antenneneinheit keine zusätzliche Frequenzumsetzung erforderlich ist.

Die Erfindung wird im folgenden anhand von Ausführungsbeispielen näher erläutert. Es zeigen:
- Fig. 1: ein schematisches Übertragungssystem mit einer Zentrale, einer entfernten Antenneneinheit und einer Teilnehmerstation bei einem Teilnehmer,
- Fig. 2: ein Ausführungsbeispiel eines in der Zentrale vorhandenen Senders,
- Fig. 3: ein Ausführungsbeispiel einer in der Antenneneinheit vorhandenen Empfangs- und Sendeeinheit,
- Fig. 4: ein Ausführungsbeispiel einer in der Teilnehmerstation vorhandenen Antenneneinheit und
- Fig. 5: ein weiteres Ausführungsbeispiel eines Übertragungssystems.

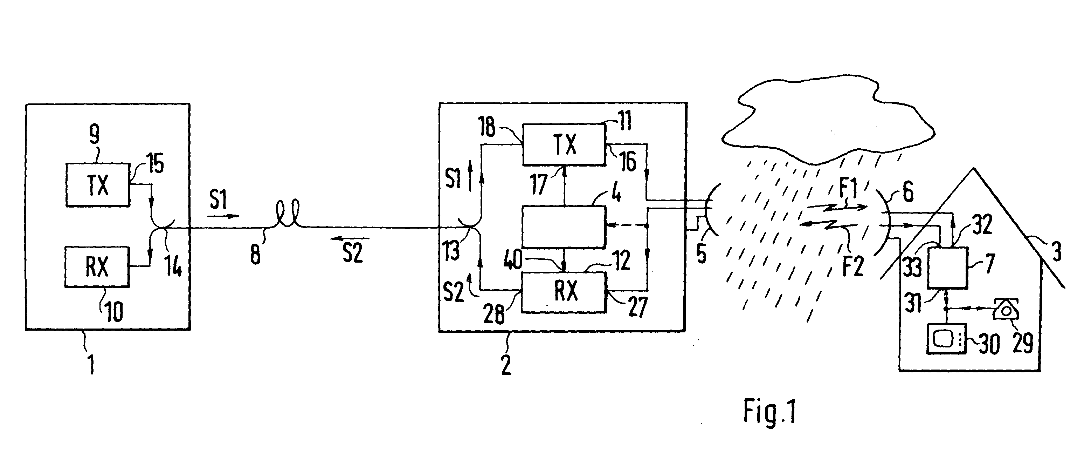

In Fig. 1 ist schematisch ein Ausführungsbeispiel eines Übertragungssystems gezeigt, das für eine bidirektionale Signalübertragung geeignet ist und das eine Zentrale 1, eine Antenneneinheit 2 und eine Teilnehmerstation 3 hat. Die Zentrale 1 und die Antenneneinheit 2 sind durch ein Übertragungsmedium 8 miteinander verbunden. Beim gezeigten Übertragungssystem ist das Übertragungssystem 8 eine Glasfaser; alternativ dazu kann aber auch ein Kupferkabel oder eine Kombination von Glasfasern und Kupferkabeln (in Verbindung mit elektrooptischen und optoelektrischen Wandlern) das Übertragungsmedium 8 bilden. An die Zentrale 1 können mehrere Antenneneinheiten 2 angeschlossen sein; das Übertragungssystem 8 kann dann z. B. eine Stern- oder Baumstruktur haben. Die Zentrale 1 sendet ein Signal S1 zur Antenneneinheit 2 (Abwärtsrichtung) und die Antenneneinheit 2 sendet ein Signal S2 zur Zentrale 1 (Aufwärtsrichtung).

Für das Übertragungsmedium 8 gilt außerdem, daß die Signalübertragung in Abwärts- und Aufwärtsrichtung über dieselbe Glasfaser erfolgen kann, die Signale S1 und S2 werden also im Wellenlängenduplexverfahren übertragen, oder daß die Signalübertragung in Abwärts- und Aufwärtsrichtung über zwei unterschiedliche Glasfasern (Raumduplexverfahren) erfolgen kann. Für die folgende Beschreibung des in Fig. 1 gezeigten Übertragungssystems gilt, daß die Signale S1 und S2 im Wellenlängenmultiplexverfahren über die Glasfaser 8 übertragen werden.

Alternativ zur optischen Signalübertragung zwischen der Antenneneinheit 2 und der Zentrale 1 ist auch eine elektrische Signalübertragung möglich. In diesem Fall ist das Übertragungsmedium 8 z. B. ein Kupfer- oder Koaxialkabel. In diesem Fall sind an den Endstellen des Koaxialkabels geeignete Frequenzumsetzer erforderlich, um elektrische Auf- und Abwärtssignale in einen Frequenzbereich zu transformieren, der an das Koaxialkabel angepaßt ist. D. h. zwischen die Zentrale 1 und dem Übertragungsmedium 8 (Koaxialkabel) ist ein erster Frequenzumsetzer eingefügt, ein zweiter ist zwischen die Antenneneinheit 2 und dem Übertragungsmedium 8 eingefügt. Der erste Frequenzumsetzer setzt das elektrische Abwärtssignal von einer Frequenz im Gigahertzbereich auf eine Frequenz im Megaherzbereich um. Der zweite Frequenzumsetzer setzt das elektrische Abwärtssignal dann von der Frequenz im Megaherzbereich auf die Frequenz im Gigahertzbereich um. In Aufwärtsrichtung erfolgt die gleiche Frequenzumsetzung.

Zwischen der Antenneneinheit 2 und der Teilnehmerstation 3 ist das Übertragungsmedium Luft, d. h. im Betrieb besteht zwischen der Antenneneinheit 2 und der Teilnehmerstation 3 eine Funkstrecke für Funksignale F1, F2, die z. B. eine Frequenz von ca. 60 GHz haben. Die Wellenlängen der Funksignale F1, F2 liegen somit im Bereich von einigen Millimetern. Zwischen den Frequenzen der beiden Funksignale F1, F2 besteht üblicherweise ein Unterschied, z. B. von ca. 1-3 GHz; in der weiteren Beschreibung der Erfindung wird dieser Unterschied nicht explizit hervorgehoben und für eine Betragsangabe der Frequenzen wird der Ausdruck "ca. 60 GHz" verwendet.

Aus der vorhergehenden Beschreibung ist ersichtlich, daß es sich bei dem gezeigten Übertragungssystem um ein hybrides Faser-Funksystem handelt, bei dem eine bidirektionale Signalübertragung erfolgt.

Die Zentrale 1 hat einen Sender 9 und einen Empfänger 10. Ein Ausgang 15 des Senders 9 ist mit einem Koppler 14 verbunden, durch den das vom Sender 9 ausgesendete Signal S1 der Glasfaser 8 zugeführt wird. Das von der Antenneneinheit 2 ausgesendete Signal S2 wird durch den Koppler 14 ausgekoppelt und dem Empfänger 10 zugeführt.

Die Antenneneinheit 2 hat einen Sender 11, einen Empfänger 12, eine Steuereinrichtung 4 und einen Koppler 13. Der Sender 11 hat einen Eingang 18 für das Signal S1, einen Eingang 17 für ein von der Steuereinrichtung 4 erzeugtes Steuersignal und einen Ausgang 16 für ein elektrisches Signal, das einer Antenne 5 zugeführt wird. Die Antenne 5 wandelt dieses elektrische Signal in das Funksignal F1, das ausgesendet wird.

Der Empfänger 12 hat einen Ausgang 28 für das Signal S2, einen Eingang 27 für ein von der Antenne 5 kommendes Signal, das aus dem von der Antenne 5 empfangenen Funksignal F2 hervorgeht, und einen Eingang 40 für das von der Steuereinrichtung 4 erzeugte Steuersignal. Der Koppler 13 verbindet den Ausgang 28 des Empfängers 12 und den Eingang 18 des Senders 11 mit der Glasfaser 8. Der Empfänger 12 ist an einer Signalübertragung von der Teilnehmerstation 3 zur Zentrale 1 beteiligt. Dazu hat er Mittel, um u. a. das aus dem empfangenen Funksignal F2 hervorgegangene Signal zu verstärken und in ein optisches Signal zu wandeln; das optische Signal ist das Signal S2. Das Signal S2 wird von dem in der Zentrale 1 vorhandenen Empfänger 10 empfangen und einer anschließenden Signalverarbeitung zugeführt.

Die Teilnehmerstation 3 hat eine Antenne 6 und eine Antenneneinheit 7, an die Teilnehmerendgeräte 29, 30 angeschlossen sind. Die Antenneneinheit hat drei Anschlüsse 31, 32, 33: Die Teilnehmerendgeräte 29, 30 sind mit dem Anschluß 31 verbunden und die Antenne 6 mit den Anschlüssen 32, 33. Die Antenne 6 empfängt das Funksignal F1 und sendet das Funksignal F2 aus. Details der Antenneneinheit 7 sind in Fig. 4 gezeigt.

Für die Antennen 5, 6 gilt, daß sie sowohl für Signale einer hohen Frequenz als auch für Signale einer niedrigen Frequenz geeignet sind. Jede Antenne 5, 6 kann z. B. eine Zweibandantenne sein oder aus zwei getrennten Einzelantennen bestehen.

In den folgenden Figuren 2, 3, 4 sind Details von in Fig. 1 gezeigten Systemkomponenten gezeigt. Im Anschluß daran wird die Betriebsweise des Übertragungssystems erläutert.

In Fig. 2 ist ein Ausführungsbeispiel des in der Zentrale 1 vorhandenen Senders 9 gezeigt. Der Sender 9 hat einen Lokaloszillator 24, einen Modulator 26 und einen Laser 25. Durch den Modulator 26 wird ein vom Lokaloszillator 24 erzeugtes Trägersignal LO1 mit einem Datensignal Data moduliert; das Trägersignal LO1 hat z. B. eine Frequenz von 7 GHz. Durch die Modulation entsteht ein (elektrisches) Trägersignal Sₑₗ₁, das dem Laser 25 zugeführt wird, der das modulierte Trägersignal Sₑₗ₁ in das Signal S1 wandelt, das ein optisches Signal ist. Das Signal S1 tritt am Ausgang 15 aus dem Sender 9 aus.

Ein Ausführungsbeispiel des in der Antenneneinheit 2 vorhandenen Senders 11 ist in Fig. 3 gezeigt; dieser Sender 11 ist an einer Signalübertragung von der Zentrale 1 zur Teilnehmerstation 3 beteiligt. Der Sender 11 hat einen Photodetektor 19, einen Schalter 22, einen Modulator 20, einen Lokaloszillator 23 und einen Verstärker 21. Der Modulator 20 und der Lokaloszillator 23 bilden zusammen einen Frequenzumsetzer. Das am Eingang 18 des Senders 11 ankommende Signal S1 wird durch den Photodetektor 19 in ein elektrisches Signal Sₑₗ₂ gewandelt, das dem modulierten Trägersignal Sₑₗ₁ (Fig.2) entspricht. Das Trägersignal Sₑₗ₁ hat z. B. eine Frequenz von ca. 7 GHz. Im Normalbetrieb, d. h. wenn es zu keiner erhöhten Dämpfung durch Regen kommt, stellt die Steuereinrichtung 4 (Fig. 1) den Schalter 22 so, daß das elektrische Signal Sₑₗ₂ dem Modulator 20 zugeführt wird. Dem Modulator 20 wird außerdem ein vom Lokaloszillator 23 erzeugtes Trägersignal LO2 zugeführt. Dadurch wird das Trägersignal Sₑₗ₁ in seiner Frequenz umgesetzt, z. B. von ca. 7 GHz auf ca. 60 GHz. Aus dem Modulator 20 tritt ein elektrisches Signal Sₑₗ₃ aus, das eine Frequenz von ca. 60 GHz hat, das der Verstärker 21 verstärkt und dem Ausgang 16 des Senders 11 zuführt. Der Ausgang 16 ist wie bereits erwähnt mit der Antenne 5 verbunden, die das verstärkte elektrische Signal Sₑₗ₃ als Funksignal F1 (ca. 60 GHz) aussendet (Fig. 1).

Die Stellung des Schalters 22 ist z. B. bei starkem Regen so, daß das elektrische Signal Sₑₗ₂ am Modulator 20 und am Verstärker 21 vorbeigeführt wird. In diesem Fall wird das elektrische Signal Sₑₗ₂ direkt, d. h. ohne Frequenzumsetzung, dem Ausgang 16 des Transceivers 11 zugeführt und das Funksignal F1 hat dann eine Frequenz von ca. 7 GHz.

In Fig. 4 ist ein Ausführungsbeispiel der in der Teilnehmerstation 3 vorhandenen Antenneneinheit 7 gezeigt, die prinzipiell einen ähnlichen Aufbau hat, wie die in Fig. 1 gezeigte Antenneneinheit 2. Die Antenneneinheit 7 hat einen zwischen die Anschlüsse 31 und 33 geschalteten Empfänger 38, der u. a. ein aus dem emfangenen Funksignal F1 entstandenes elektrisches Signal Sₑₗ₄ in ein elektrisches Signal Sₑₗ₆ wandelt und den Teilnehmerendgeräten 29, 30 zuführt; das elektrische Signal Sₑₗ₆ hat eine Frequenz von ca. 7 GHz. Die Antenneneinheit 7 hat außerdem eine Steuereinrichtung 34, einen Modulator 36, einen Lokaloszillator 35, einen Verstärker 37 und einen Schalter 39. Auch bei dieser Antenneneinheit 7 bilden der Modulator 36 und der Lokaloszillator 35 einen Frequenzumsetzer. Der Frequenzumsetzer, der Schalter 39 und der Verstärker 37 bilden einen Sender 41.

In Fig. 4 ist die Schalterstellung (Normalstellung) des Schalters 39 so, daß ein Signal Sₑₗ₅, das z. B. eine Frequenz von ebenfalls ca. 7 GHz hat, dem Modulator 36 zugeführt wird (Aufwärtsrichtung). Die Teilnehmerendgeräte 29, 30 sind an ein hausinternes Koaxialkabelnetz angeschlossen, d. h. von ihnen ausgesendete Signale liegen im Frequenzbereich von ca. 500 MHz. Zwischen dem hausinternen Koaxialkabelnetz und dem Anschluß 31 der Antenneneinheit 7 ist deshalb ein Frequenzumsetzer eingefügt, um die von den Teilnehmerendgeräten 29, 30 ausgesendeten Signale in das Signal Sₑₗ₅ (Frequenz ca. 7 GHz) umzusetzen. In Abwärtsrichtung setzt der Frequenzumsetzer das Signal Sₑₗ₆ in einen Frequenzbereich von ca. 500 MHz um.

Der Modulator 36 moduliert ein vom Lokaloszillator 35 ausgesendetes Signal LO3 mit dem Signal Sₑₗ₅. Das Signal LO3 hat eine Frequenz im Bereich von ca. 60 GHz. Dadurch wird das Signal Sₑₗ₅ in seiner Frequenz umgesetzt, hier von ca. 7 GHz auf ca. 60 GHz. Der Verstärker 37 verstärkt das aus der Frequenzumsetzung hervorgehende Signal und führt es dem Anschluß 32 zu; das Funksignal F2 hat dann eine Frequenz von ca. 60 GHz.

Abhängig von dem von der Steuereinrichtung 34 erzeugten Steuersignal kann der Schalter 39 auch in einer zweiten Schalterstellung sein. Bei dieser Schalterstellung wird das Signal Sₑₗ₅ am Modulator 36 und am Verstärker 37 vorbei direkt dem Anschluß 32 zugeführt, d. h. es kommt zu keiner Frequenzumsetzung und das Funksignal F2 hat eine Frequenz von ca. 7 GHz.

Der Empfänger 12 (Fig. 1) und der Empfänger 38 (Fig. 4) werden jeweils durch die ihnen zugeordnete Steuereinrichtung 4, 34 gesteuert. Der Empfänger 12 empfängt ein aus dem Funksignal F2 abgeleitetes elektrisches Signal und der Empfänger 38 empfängt das aus dem Funksignal F1 abgeleitete Signal Sₑₗ₄. Jeder dieser Empfänger 12, 38 hat einen Schalter 22, 39, der durch die jeweilige Steuereinrichtung 4, 34 gesteuert wird. Die Steuerung erfolgt automatisch, sodaß jeder Empfänger 12, 38 bei starkem Regen zum Empfang eines Signals niedrigerer Frequenz umgeschaltet wird. Für den Fall, daß bei starkem Regen das Funksignal F1 eine Frequenz von ca. 7 GHz hat, bedeutet dies, daß in der Antenneneinheit 7 die Steuereinrichtung 34 den Empfänger 38 zum Empfang eines Signals umschaltet, das eine Frequenz von ca. 7 GHz hat. Hört es auf zu regnen, schaltet die Steuereinrichtung 34 den Empfänger 38 wieder zum Empfang eines 60 GHz Signals um.

Im folgenden wird die Betriebsweise des Übertragungssystems detaillierter erläutert. Wie bereits erwähnt, ist in jeder Antenneneinheit 2, 7 eine Steuereinrichtung 4, 34 vorhanden; jede kann ein Steuersignal erzeugen, das die Schalterstellung des mit ihr verbundenen Schalters 22, 39 steuert. Jede Steuereinrichtung 4, 34 hat außerdem Mittel, um die Signalqualität, und damit auch die Dämpfung, des empfangenen Funksignals F1, F2 zu bestimmen. Ein aus dem empfangenen Funksignal F1, F2 abgeleitetes Signal ist Eingangsgröße für die Steuereinrichtung 4, 34; dies ist durch einen gestrichelten Pfeil angedeutet, der auf die Steuereinrichtung 4, 34 zeigt (Fig. 1 und Fig. 4).

Die erwähnten in den Steuereinrichtungen 4, 34 vorhandenen Mittel können z. B. die Bitfehlerrate (BER) des empfangenen Funksignals F1, F2 bestimmen oder einen Sollwert der Empfangsfeldstärke mit einem Istwert vergleichen. Daraus kann abgeleitet werden, ob das Funksignal F1, F2 einer erhöhten Dämpfung, z. B. durch starken Regen, unterliegt. Ist dies der Fall, wird mit Hilfe des Steuersignals der Schalter 22, 39 in die Stellung gebracht, durch die das Signal Sₑₗ₂, Sₑₗ₅ am Modulator 20, 36 vorbeigeführt wird.

Die Signale Sₑₗ₂, Sₑₗ₅ werden also ohne eine Umsetzung auf eine Frequenz von ca. 60 GHz direkt oder über einen Verstärker der Antenne 5, 6 zugeführt. Die Signale Sₑₗ₂, Sₑₗ₅ haben Frequenzen, die durch den Sender 9 und den in der Teilnehmerstation 3 vorhandenen Frequenzumsetzer bestimmt sind. Als Beispiel sendet der Sender 9 das Signal S1 mit einer Frequenz von 7 GHz aus, d. h. auch das Funksignal F1 hat in diesem Fall eine Frequenz von 7 GHz. Auch das Signal Sₑₗ₅ hat nach der Umsetzung wie bereits erwähnt eine Frequenz von ca. 7 GHz.

Im Betrieb wird in jeder Antenneneinheit 2, 7 kontinuierlich die Signalqualität und damit auch die Dämpfung des empfangenen Funksignals F1, F2 bestimmt. Regnet es stark, erkennt dies jede Antenneneinheit 2, 7 und es werden die Sender 11, 41 und die Empfänger 12, 38 automatisch auf die niedrigere Frequenz (z. B. ca. 7 GHz) umgeschaltet.

Bedingt durch die Reduzierung der Frequenz von ca. 60 GHz auf ca. 7 GHz werden die Funksignale F1, F2 z. B. durch starken Regen weniger stark gedämpft und es kann eine Signalübertragung auch bei solchen Wetterverhältnissen gewährleistet werden.

Außerdem ist anzumerken, daß die erwähnten Schalter 22, 39 nicht notwendigerweise mechanische Schalter sein müssen. Selbstverständlich können auch andere bekannte Schalter, z. B. elektronische, verwendet werden. Wesentlich ist, daß das elektrische Signal Sₑₗ₂, Sₑₗ₅ gezielt entweder dem Modulator 20, 36 zugeführt oder daran vorbei geführt werden kann.

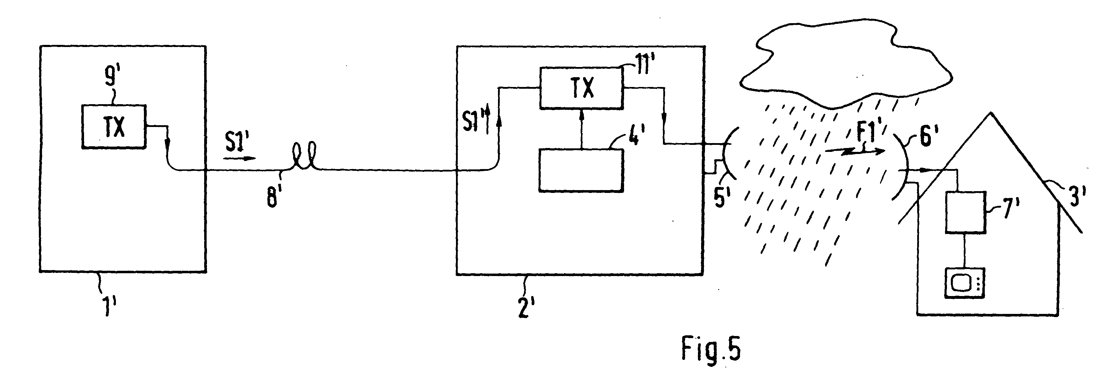

In der vorhergehenden Beschreibung wurde die Erfindung anhand eines bidirektionalen Übertragungssystems beschrieben. Der Grundgedanke der Erfindung, nämlich bei starkem Regen vorhandene Sender und Empfänger auf eine niedrigere Frequenz umzuschalten, ist auch bei einem in Fig. 5 gezeigten unidirektionalen Übertragungssystem anwendbar, bei dem ein Signal S1' von einer Zentrale 1' über eine Antenneneinheit 2' zu einer Teilnehmerstation 3' übertragen wird. Die Struktur des unidirektionalen Übertragungssystems ist gleich dem in Fig. 1 gezeigten Übertragungssystem und es sind nur die an einer Signalübertragung in Abwärtsrichtung beteiligten Systemkomponenten gezeigt. In Fig. 5 gezeigte Systemkomponenten haben ein mit einem Strich versehenes Bezugszeichen, um anzudeuten, daß deren Eigenschaften und Funktionen den Eigenschaften und Funktionen der in Fig. 1 gezeigten Systemkomponenten ähnlich sind.

Die Antenneneinheit 2' empfängt in diesem Fall von der Teilnehmerstation 3' kein Funksignal, kann also selbstständig nicht feststellen, ob das von ihr ausgesendete Funksignal F1' durch starken Regen zusätzlich gedämpft wird.

Bei starkem Regen kann z. B. durch Fernsteuerung der in der Antenneneinheit 2' vorhandenen Steuereinrichtung 4' eine Frequenzumsetzung auf eine höhere Frequenz (z. B. ca. 60 GHz) umgangen werden, so daß das Funksignal F1' mit der niedrigeren Frequenz ausgesendet wird. Es ist aber auch möglich, daß mit Hilfe benachbarter Funkstrecken erkannt werden kann, ob eine erhöhte Dämpfung durch starken Regen vorliegt.

Die Antenneneinheit 2' für ein solches unidirektionales Übertragungssystem enthält den Sender 11' und die Antenne 5', um das Funksignal F1' auszusenden, und die Steuereinrichtung 4', um bei starkem Regen eine Umgehung der Frequenzumsetzung zu veranlaßen. Die Teilnehmerstation 3' für das unidirektionale Übertragungssystem enthält einen Empfänger und eine Antenne 6', um das Funksignal zu empfangen und den Teilnehmerendgeräten zuzuführen, und eine Steuereinrichtung. Wird erkannt, daß ein Funksignal F1' empfangen wird, das eine niedrigere Frequenz als im Normalbetrieb hat, schaltet die Steuereinrichtung den Empfänger zum Empfang eines solchen Funksignals um.

## Patentansprüche

1. Übertragungssystem mit einer Zentrale (1), mindestens einer Antenneneinheit (2) und mindestens einer Teilnehmerstation (3),
- bei dem die Zentrale (1) und die mindestens eine Antenneneinheit (2) durch ein Übertragungsmedium (8) verbunden sind,
- bei dem die mindestens eine Antenneneinheit (2) ein von der Zentrale (1) ausgesendetes erstes Signal (S1) empfangen und in ein erstes Funksignal (F1) frequenzumsetzend wandeln kann, das eine erste Frequenz hat,
- bei dem die mindestens eine Teilnehmerstation (3) das erste Funksignal (F1) empfangen kann,
- bei dem die mindestens eine Antenneneinheit (2) ein von der mindestens einen Teilnehmerstation (3) ausgesendetes zweites Funksignal (F2) einer zweiten Frequenz empfangen, in ein zweites Signal (S2) frequenzumsetzend wandeln und dieses zur Zentrale (1) senden kann,
**dadurch gekennzeichnet,**
- **daß** in der mindestens einen Antenneneinheit (2) und in der mindestens einen Teilnehmerstation (3) Mittel (4, 11; 34, 41) vorhanden sind, die geeignet sind, eine erhöhte Dämpfung des ersten und/oder des zweiten Funksignals (F1, F2) zu erkennen,
- **daß** die jeweiligen Mittel (4, 11; 34, 41) in einem solchen Fall die erste und die zweite Frequenz reduzieren,
- **daß** die jeweiligen Mittel (4, 11; 34, 41) im Fall einer reduzierten Frequenz vorhandene Empfänger (12; 38) in der jeweiligen Antenneneinheit (2) und in der jeweiligen Teilnehmerstation (3) auf den Empfang eines Funksignals (F1, F2) mit der reduzierten Frequenz umschalten, und
- **daß** die reduzierte erste Frequenz gleich einer Frequenz ist, die das von der Antenneneinheit (2) empfangene erste Signal (S1) hat und die reduzierte zweite Frequenz gleich einer Frequenz ist, die das zweite Signal hat.

2. Übertragungssystem nach Anspruch 1, bei dem die erste und zweite Frequenz jeweils im Bereich von einigen 10 GHz liegt und jede reduzierte Frequenz im Bereich von einigen GHz.

3. Antenneneinheit (2, 7) für ein Übertragungssystem nach Anspruch 1, mit einem Sender (11, 41), der ein erstes Signal (S1, Sₑₗ₅) empfangen und in ein Funksignal (F1; F2) einer ersten Frequenz frequenzumsetzend wandeln und aussenden kann, und mit einem Empfänger (12, 38), der ein Funksignal (F2; F1) einer zweiten Frequenz empfangen und in ein zweites Signal (S2, Sₑₗ₆) frequenzumsetzend wandeln kann,
**dadurch gekennzeichnet,**
- **daß** Mittel (4, 34) vorhanden sind, die eine erhöhte Dämpfung des empfangenen Funksignals (F2, F1) erkennen können,
- **daß** die Mittel (4, 34) ausgebildet sind, den Sender (11, 41) so zu steuern, daß die erste Frequenz des zu sendenden Funksignals (F1, F2) bei einer erhöhten Dämpfung reduziert ist,
- **daß** die Mittel (4, 34) ausgebildet sind, den Empfänger (12, 38) so zu steuern, daß er ein Funksignal (F2, F1) empfangen kann, das bei erhöhter Dämpfung eine reduzierte zweite Frequenz hat, und
- **daß** die reduzierte erste Frequenz gleich einer Frequenz ist, die das von der Antenneneinheit (2, 7) empfangene erste Signal (S1) hat und die reduzierte zweite Frequenz gleich einer Frequenz ist, die das zweite Signal hat.

4. Antenneneinheit (2, 7) nach Anspruch 3, bei der die Mittel (4, 34) die erhöhte Dämpfung des ersten und/oder des zweiten Funksignals (F1, F2) erkennen und einen im Sender (11, 41) und einen im Empfänger (12, 38) vorhandenen Schalter (22, 39) so steuern, daß der Sender (11, 41) ein Signal aussenden kann, das die entsprechend reduzierte Frequenz hat, und daß der Empfänger (12, 38) ein Signal (Sₑₗ₄) empfangen kann, das die entsprechend reduzierte Frequenz hat.

5. Antenneneinheit (2, 7) nach Anspruch 4, bei der der Sender (11, 41) einen Frequenzumsetzer hat, der aus einem Modulator (20, 36) und einem Oszillator (23, 35) besteht und der dazu dient, das erste Signal (S1, Sₑₗ₅) auf die Frequenz des Funksignals (F1, F2) umzusetzen.

6. Antenneneinheit nach Anspruch 3, bei der die erste und zweite Frequenz jeweils im Bereich von einigen 10 GHz liegt und die reduzierte Frequenz im Bereich von einigen GHz.

7. Übertragungssystem mit einer Zentrale (1'), mindestens einer Antenneneinheit (2') und mindestens einer Teilnehmerstation (3'),
- bei dem die Zentrale (1') und die mindestens eine Antenneneinheit (2') durch ein Übertragungsmedium (8') verbunden sind,
- bei dem die mindestens eine Antenneneinheit (2') ein von der Zentrale (1) ausgesendetes Signal (S1') empfangen und in ein Funksignal (F1') frequenzumsetzend wandeln kann, das eine festgelegte Frequenz hat, und
- bei dem die mindestens eine Teilnehmerstation (3') das Funksignal (F1') empfangen kann,
**dadurch gekennzeichnet,**
- **daß** in der mindestens einen Antenneneinheit (2') Mittel (4', 11') vorhanden sind, die die festgelegte Frequenz des Funksignals (F1') reduzieren, wenn die Mittel (4', 11') ein Steuersignal empfangen, das eine erhöhte Dämpfung des Funksignals (F1') signalisiert, wobei die reduzierte Frequenz gleich einer Frequenz ist, die das von der Zentrale (1) ausgesendete Signal (S1) hat und
- **daß** mindestens eine in einer der Teilnehmerstationen (3') vorhandene, weitere Antenneneinheit (7') die reduzierte Frequenz des Funksignals (F1') erkennt.

## Claims

1. Transmission system with a main station (1), at least one antenna unit (2) and at least one user station (3),
- in which the main station (1) and the at least one antenna unit (2) are connected through a transmission medium (8),
- in which the at least one antenna unit (2) can receive a first signal (S1) emitted by the main station (1) and convert it, by frequency conversion, into a first radio signal (F1) which has a first frequency,
- in which the at least one user station (3) can receive the first radio signal (F1),
- in which the at least one antenna unit (2) can receive a second radio signal (F2), of a second frequency, emitted by the at least one user station (3), convert it, by frequency conversion, into a second signal (S2) and transmit this to the main station (1),
**characterized in that**
- in the at least one antenna unit (2) and in the at least one user station (3) there are means (4, 11; 34; 41) which are suitable for detecting an increased attenuation of the first and/or of the second radio signal (F1, F2),
- in such a case, the respective means (4, 11; 34, 41) reduce the first and the second frequency,
- in the case of a reduced frequency, the respective means (4, 11; 34, 41) switch receivers (12; 38) located in the respective antenna unit (2) and in the respective user station (3) over to receive a radio signal (F1, F2) at the reduced frequency, and
- the reduced first frequency is equal to a frequency which the first signal (S1) received by the antenna unit (2) has and the reduced second frequency is equal to a frequency which the second signal has.

2. Transmission system according to Claim 1, in which the first and second frequencies respectively lie in the range of some 10 GHz and each reduced frequency lies in the range of some GHz.

3. Antenna unit (2, 7) for a transmission system according to Claim 1, with a transmitter (11, 41) which can receive a first signal (S1, Sₑₗ₅), convert it, by frequency conversion, into a radio signal (F1, F2) of a first frequency and emit it, and with a receiver (12, 38) which can receive a radio signal (F2, F1) of a second frequency and convert it, by frequency conversion, into a second signal (S2, Sₑₗ₆),
**characterized in that**
- there are means (4, 34) which can detect an increased attenuation of the received radio signal (F2, F1),
- the means (4, 34) are designed to control the transmitter (11, 41) in such a way that the first frequency of the radio signal (F1, F2) to be transmitted is reduced in the case of an increased attenuation,
- the means (4, 34) are designed to control the receiver (12, 38) in such a way that it can receive a radio signal (F2, F1) which, in the case of an increased attenuation, has a reduced second frequency, and
- the reduced first frequency is equal to a frequency which the first signal (S1) received by the antenna unit (2, 7) has and the reduced second frequency is equal to a frequency which the second signal has.

4. Antenna unit (2, 7) according to Claim 3, in which the means (4, 34) detect the increased attenuation of the first and/or of the second radio signal (F1, F2) and control a switch (22, 39) located in the transmitter (11, 41) and in the receiver (12, 38) in such a way that the transmitter (11, 41) can emit a signal which has the correspondingly reduced frequency, and the receiver (12, 38) can receive a signal (Sₑₗ₄) which has the correspondingly reduced frequency.

5. Antenna unit (2, 7) according to Claim 4, in which the transmitter (11, 41) has a frequency converter, which consists of a modulator (20, 36) and an oscillator (23, 35) and which serves to convert the first signal (S1, Sₑₗ₅) to the frequency of the radio signal (F1, F2).

6. Antenna unit according to Claim 3, in which the first and second frequencies respectively lie in the range of some 10 GHz and the reduced frequency lies in the range of some GHz.

7. Transmission system with a main station (1'), at least one antenna unit (2') and at least one user station (3'),
- in which the main station (1') and the at least one antenna unit (2') are connected through a transmission medium (8'),
- in which the at least one antenna unit (2') can receive a first signal (S1') emitted by the main station (1') and convert it, by frequency conversion, into a radio signal (F1') which has a defined frequency, and
- in which the at least one user station (3') can receive the radio signal (F1'),
**characterized in that**
- in the at least one antenna unit (2') there are means (4', 11') which reduce the defined frequency of the radio signal (F1') when the means (4', 11') receive a control signal which signals an increased attenuation of the radio signal (F1'), the reduced frequency being equal to a frequency which the signal (S1) emitted by the main station (1') has and
- at least one further antenna unit (7'), located in one of the user stations (3'), detects the reduced frequency of the radio signal (F1').

## Revendications

1. Système de transmission doté d'une centrale (1), d'au moins une unité antenne (2) et d'au moins une station utilisateur (3),
- dans lequel la centrale (1) et au moins une unité antenne (2) sont reliées par un moyen de transmission (8),
- dans lequel au moins une unité antenne (2) peut recevoir un premier signal (S1) émis par la centrale (1) et peut, en changeant de fréquence, le convertir en un signal radio (F1) ayant une première fréquence,
- dans lequel au moins une station utilisateur (3) peut recevoir le premier signal radio (F1),
- dans lequel au moins une unité antenne (2) peut recevoir un deuxième signal radio (F2) émis par au moins une station utilisateur (3) ayant une deuxième fréquence, peut le convertir, en changeant de fréquence, en un deuxième signal (S2) et l'émettre en direction de la centrale (1),
**caractérisé en ce que**
- dans au moins une unité antenne (2) et au moins une station utilisateur (3), des moyens (4, 11 ; 34, 41) sont présents qui sont appropriés pour identifier une forte atténuation du premier et/ou deuxième signal radio (F1, F2),
- les moyens respectifs (4, 11 ; 34, 41) réduisent dans ce cas la première et la deuxième fréquence,
- les moyens respectifs (4, 11 ; 34, 41) commutent, en cas de fréquence réduite, les récepteurs présents (12 ; 38) dans l'unité antenne (2) respective et dans la station utilisateur respective (3) sur la réception d'un signal radio (F1, F2) à la fréquence réduite, et
- la première fréquence réduite est identique à une fréquence qu'a le premier signal (S1) reçu de l'unité antenne (2) et la deuxième fréquence réduite est identique à une fréquence qu'a le deuxième signal.

2. Système de transmission selon la revendication 1, dans lequel la première et la deuxième fréquence se situent respectivement dans la zone de quelques dizaines de GHz et chaque fréquence réduite dans la zone de quelques GHz.

3. Unité antenne (2, 7) pour un système de transmission selon la revendication 1, dotée d'un émetteur (11, 41) qui peut recevoir un premier signal (S1, Sₑₗ₅) et peut le transformer, en changeant de fréquence, en un signal radio (F1 ; F2) ayant une première fréquence, et d'un récepteur (12, 38) qui peut recevoir un signal radio (F2 ; F1) ayant une deuxième fréquence et peut le transformer, en changeant de fréquence, en un deuxième signal (S2, Sₑₗ₆),
**caractérisée en ce que**
- des moyens (4, 34) sont présents pouvant identifier une forte atténuation du signal radio reçu (F2, F1) ,
- les moyens (4, 34) sont conçus pour commander l'émetteur (11, 41) de telle manière que la première fréquence du signal radio à émettre (F1, F2) soit réduite en cas de forte atténuation,
- les moyens (4, 34) sont conçus pour commander le récepteur (12, 38) de telle manière qu'il puisse recevoir un signal radio (F1, F2) qui a une deuxième fréquence réduite en cas de forte atténuation, et
- la première fréquence réduite est identique à une fréquence qu'a le premier signal (S1) reçu de l'unité antenne (2, 7) et la deuxième fréquence réduite est identique à une fréquence qu'a le deuxième signal.

4. Unité antenne (2, 7) selon la revendication 3, dans laquelle les moyens (4, 34) identifient la forte atténuation du premier et/ou deuxième signal (F1, F2) et commande un commutateur (22, 39) présent dans l'émetteur (11, 41) et dans le récepteur (12, 38) de telle manière que l'émetteur (11, 41) puisse émettre un signal qui a la fréquence réduite en conséquence et que le récepteur (12, 38) puisse recevoir un signal (Sₑₗ₄) qui a la fréquence réduite en conséquence.

5. Unité antenne (2, 7) selon la revendication 4, dans laquelle l'émetteur (11, 41) possède un convertisseur de fréquence qui se compose d'un modulateur (20, 36) et d'un oscillateur (23, 35) et qui sert à convertir le premier signal (S1, Sₑₗ₅) en la fréquence du signal radio (F1, F2).

6. Unité antenne selon la revendication 3, dans laquelle la première et la deuxième fréquence se situent respectivement dans la zone de quelques dizaines de GHz et chaque fréquence réduite dans la zone de quelques GHz.

7. Système de transmission doté d'une centrale (1'), d'au moins une unité antenne (2') et d'au moins une station utilisateur (3'),
- dans lequel la centrale (1') et au moins une unité antenne (2') sont reliées par un moyen de transmission (8'),
- dans lequel au moins une unité antenne (2') peut recevoir un signal (S1') émis par la centrale (1') et peut, en changeant de fréquence, le convertir en un signal radio (F1') ayant une fréquence déterminée,
- dans lequel au moins une station utilisateur (3') peut recevoir le signal radio (F1'),
**caractérisé en ce que**
- des moyens (4', 11') sont présents dans au moins une unité antenne (2'), réduisant la fréquence déterminée du signal radio (F1'), quand les moyens (4', 11') reçoivent un signal de commande qui signale une forte atténuation du signal radio (F1'), la fréquence réduite étant identique à une fréquence qu'a le signal (S1) émis par la centrale (1) et
- au moins une autre unité antenne (7') présente dans l'une des stations utilisateur (3') identifie la fréquence réduite du signal radio (F1').
